# EUROPEAN PATENT APPLICATION

(11) **EP 2 784 678 A2**
(43) Date of publication of application: **01.10.2014**
(21) Application number: 14160889.3
(22) Date of filing: 20.03.2014
(51) Int. Cl.: G06F 11/07

(54) **Integrated circuit**

(30) Priority: 25.03.2013 JP 2013062229; 06.12.2013 JP 2013252668
(71) Applicant: Kabushiki Kaisha Toshiba, Tokyo 105-8001 (JP)
(72) Inventor: Takano, Hiroyuki, Tokyo, 105-8001 (JP)
(74) Representative: HOFFMANN EITLE

(57) **Abstract**

Certain embodiments provide an integrated circuit comprising: plural devices; a processor; a DMA controller; a bus; and a failure diagnostic device connected to the DMA controller and diagnoses failure of the DMA controller, the failure diagnostic device including: a timer of which a limit time is set up by the processor for the time from a notification of a transfer request to the DMA controller down to output of a transfer source address signal to the bus and starts a timing operation in response to the notification; a monitor that stops the timing operation in response to the output from the DMA controller to the bus; and a detector that detects occurrence of a failure according to an excess of an outcome of the timing operation stopped by the monitor over the limit time.

## Description

### CROSS-REFERENCE TO RELATED APPLICATIONS

The present application claims priority under 35 U.S.C. 119 to Japanese Patent Applications No. 2013-62229, filed on March 25, 2013 and No. 2013-252668, filed on December 6, 2013, the entire disclosure of which is incorporated herein by reference.

### FIELD

One embodiment relates to an integrated circuit and a failure diagnostic device of a DMA (direct memory access) controller.

### BACKGROUND

Functional safety standards for electric and electronic parts to be used in automobiles have been laid down in recent years. Automobiles are provided with microcontrollers for control applications having failsafe features and such microcontrollers are required to show a high failure detection rate. A microcontroller has a DMA (direct memory access) controller.

Since a DMA controller has an inter data transfer channel arbitration circuit in the inside, reception of a data transfer request does not necessarily immediately start a data transfer operation. A conventional failure monitoring circuit may be so configured as to be aware of the arbitration circuit in the inside of a DMA controller or alternatively, in the case of a dual lock step (dual core lock step) system using two DMA controllers that are to be treated as complete black boxes, to compare the DMA controllers on a clock per clock basis (see, for example, Patent Literature 3). While any known monitoring circuit is inevitably made to have either of the two alternative configurations, the former configuration, or the circuit configuration relying on an arbitration circuit, is complex and hence monitoring circuits based on a dual clock step system take majority.

### BRIEF DESCRIPTION OF THE DRAWINGS

FIG. 1 is a block diagram of integrated circuit according to an embodiment, illustrating the configuration thereof;
FIG. 2 is a block diagram of a DMA controller that can be used for integrated circuit according to the embodiment, schematically illustrating an exemplar configuration thereof;
FIG. 3 is a block diagram of the failure diagnostic device of integrated circuit according to the embodiment;
FIGS. 4A through 4E are plural timing charts, illustrating exemplar diagnostic methods of the failure diagnostic device of integrated circuit according to the embodiment;
FIG. 5A is a block diagram of integrated circuit according to the first modification, illustrating the configuration thereof;
FIG. 5B is a block diagram of integrated circuit according to the second modification, illustrating the configuration thereof;
FIG. 5C is a block diagram of integrated circuit according to the third modification, illustrating the configuration thereof;
FIG. 6A is a block diagram of integrated circuit according to the fourth modification, illustrating the configuration thereof;
FIG. 6B is a block diagram of integrated circuit according to the fifth modification, illustrating the configuration thereof; and
FIG. 7 is a block diagram of integrated circuit according to the sixth modification, illustrating the configuration thereof.

### DETAILED DESCRIPTION

However, a failure monitoring circuit based on a dual clock step system is accompanied by disadvantages including an increased failure rate and a raised probability of failure occurrence due to a common cause or a systematic failure.

Additionally, while a circuit that is so configured as to be aware of the arbitration circuit in the inside of a DMA controller can detect any failure that occurs in a particular part in the inside of the circuit, such a circuit does not have a feature of detecting a failure that spreads in the entire DMA controller.

Certain embodiments provide an integrated circuit comprising: plural devices configured to be controlled; a processor configured to control the plural devices; a DMA controller configured to control data transfers among the plural devices by an instruction from the processor; a bus configured to be commonly connected to the DMA controller, the processor and the plural devices; and a failure diagnostic device connected to the DMA controller and configured to diagnose failure of the DMA controller, the failure diagnostic device including: a timer of which a limit time configured to be set up by the processor for the time from a notification of a transfer request to the DMA controller down to output of a transfer source address signal to the bus and start a timing operation in response to the notification; a monitor configured to stop the timing operation in response to the output from the DMA controller to the bus; and a detector configured to detect occurrence of a failure according to an excess of an outcome of the timing operation stopped by the monitor over the limit time.

Certain embodiments provide an integrated circuit an integrated circuit comprising: plural devices configured to be controlled; a DMA controller configured to control data transfers among the plural devices by a processor instruction for the plural devices; a bus configured to be connected to the DMA controller and the plural devices; and a failure diagnostic device connected to the DMA controller and configured to diagnose failure of the DMA controller, the failure diagnostic device including: a timer of which a limit time configured to be set up by the processor instruction for the time from a notification of a transfer request to the DMA controller down to output of a transfer source address signal to the bus and start a timing operation in response to the notification; a monitor configured to stop the timing operation in response to the output from the DMA controller to the bus; and a detector configured to detect occurrence of a failure according to an excess of an outcome of the timing operation stopped by the monitor over the limit time.

Certain embodiments provide a failure diagnostic device of a DMA controller, comprising: a timer of which a time, from a notification of a transfer request to the DMA controller for controlling data transfers among plural devices down to the output of a transfer source address signal to a bus, is set up as a limit time by a processor instruction and which starts a timing operation in response to the notification; a monitor configured to stop the timing operation in response to the output from the DMA controller to the bus; and a detector configured to detect occurrence of a failure according to an excess of an outcome of the timing operation stopped by the monitor over the limit time.

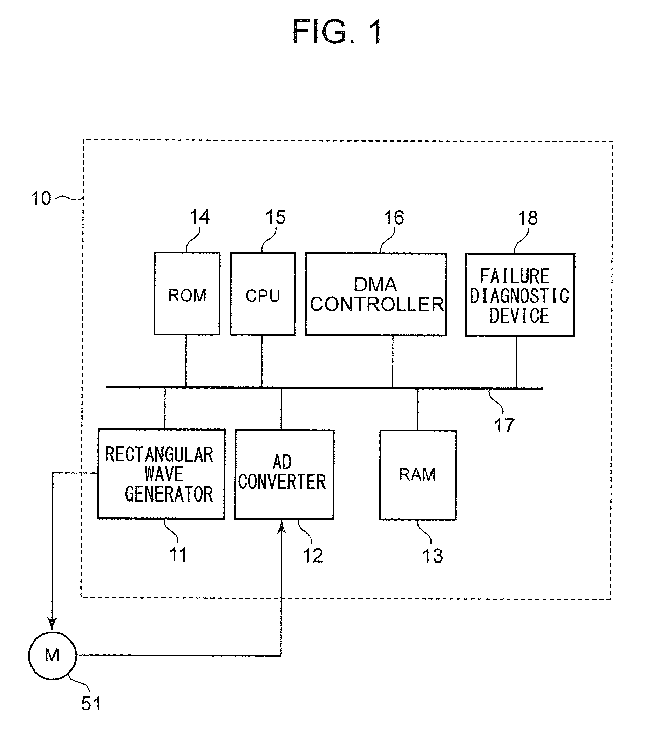

Now, an embodiment of integrated circuit according to the present invention will be described below by referring to FIGS. 1 through 7. Throughout the drawings, the same parts are denoted respectively by the same reference symbols and will not be described repeatedly.

### (Embodiment)

FIG. 1 is a block diagram of an embodiment of integrated circuit, illustrating the configuration thereof.

The integrated circuit of this embodiment is a semiconductor integrated circuit 10.

The semiconductor integrated circuit 10 comprises a rectangular wave generator 11 (device), an AD converter 12 (device) and a RAM (random access memory) 13.

The rectangular wave generator 11 is a device for generating a rectangular pulse, which device is an object to be controlled. Motor 51 is driven and controlled by a pulse string obtained by pulse width modulation.

The AD converter 12 is a device for AD(analog to digital) -converting an electric current. The AD converter 12 is also an object to be controlled. The electric current comes from the motor 51 or the rotation angle sensor of the motor 51.

The RAM 13 is a device for storing the digital signals from the AD converter 12. The RAM 13 is also an object to be controlled. The storage region of the RAM 13 includes a data region and a work region. The data region stores data. The work region stores the results of arithmetic operations.

In the following description, the rectangular wave generator 11, the AD converter 12 and the RAM 13 may sometimes be referred to as devices 11 through 13.

The semiconductor integrated circuit 10 comprises a ROM (read only memory) 14, a CPU (processor) 15, a DMA controller 16, a bus 17 and a failure diagnostic device (failure diagnostic unit) 18.

The ROM 14 stores information on allocations of the storage regions. The CPU 15 allocates the storage regions on the memory space. The ROM 14 stores instruction execution programs.

The CPU 15 is a processor for controlling the devices 11 through 13. The CPU 15 allocates the memory space for each of the devices 11, 12, 13. The CPU 15 allocates the memory space to the RAM region and the ROM region for each of the devices 11, 12, 13.

The DMA controller 16 controls data transfer operations among the devices 11 through 13 according to instructions from the CPU 15.

The DMA controller 16 executes a DMA transfer operation in response to a transfer request for a direct memory access (DMA) from a transfer source to a transfer destination among the devices 11 through 13.

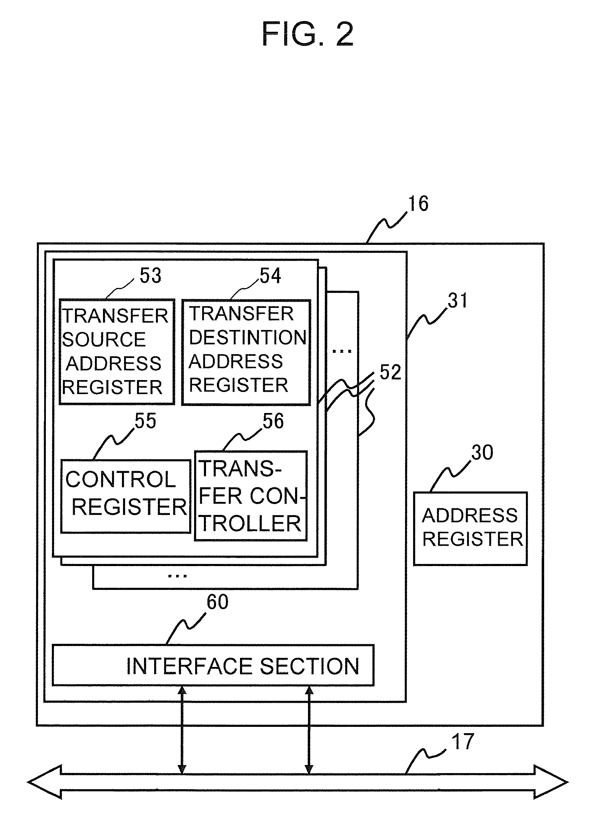

FIG. 2 is a block diagram of the DMA controller 16, schematically illustrating an exemplar configuration thereof. The reference symbols in FIG. 2 that are already described respectively denote the same components.

The DMA controller 16 comprises an address register 30 for initialization, sub circuits 52 provided for respective channels and an interface section 60.

The address register 30 stores the addresses initialized by the CPU 15.

The first sub circuit 52 comprises a transfer source address register 53, a transfer destination address register 54, a control register 55 and a transfer controller 56.

The transfer source address register 53 stores a transfer source address. The transfer destination address register 54 stores a transfer destination address.

A transfer source address indicates the address of a transfer source, of the device 11, 12 or 13. A transfer destination address is the address of a transfer destination.

The control register 55 stores a command, a flag enabling or disabling a transfer, a status and so on. The control register 55 has plural resister bits.

The transfer controller 56 executes a DMA transfer of data by means of the control register 55. The transfer controller 56 comprises an address generator circuit 58. The address generator circuit 58 generates an address and also an address signal.

Additionally, the transfer controller 56 controls data read/write timings. The transfer controller 56 controls, among others, arbitrations, receptions of DMA transfer requests and notifications of acknowledgements for DMA transfer requests.

Each of the remaining sub circuits 52 has a configuration substantially the same as that of the sub circuit 52 for Channel 1. The interface section 60 operates as interface between each of the sub circuits 52 and the bus 17.

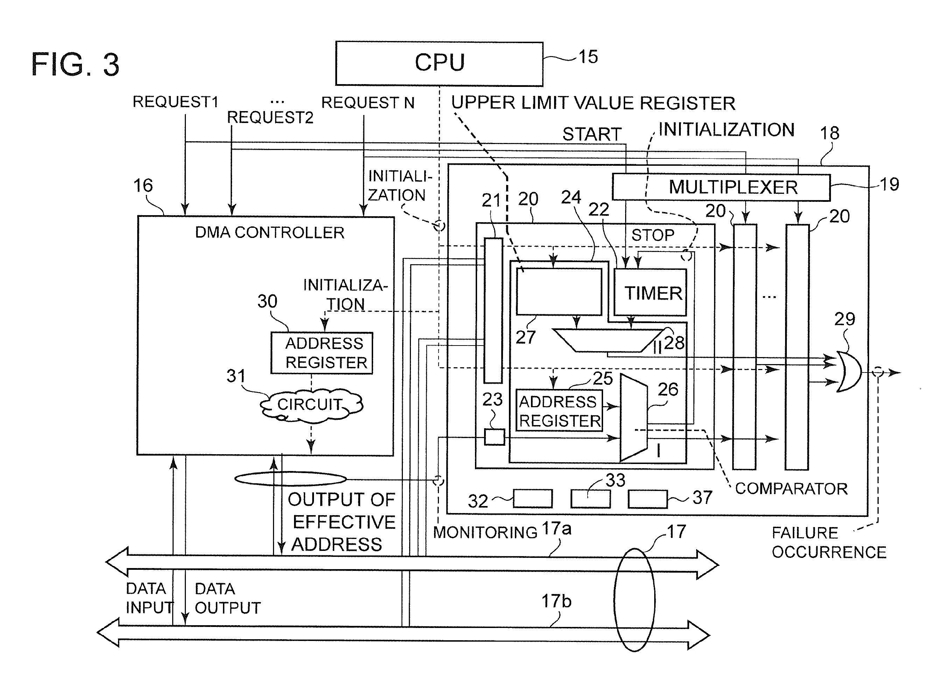

Referring to FIG. 1, the bus 17 is commonly connected to the DMA controller 16, the CPU 15 and the devices 11 through 13. The bus 17 includes an address bus 17a (FIG. 3) and a data bus 17b. The bus 17 determines the size of the memory space according to the bus width of the bus 17. The memory space is shared by the plural devices.

The failure diagnostic device 18 is connected to the DMA controller 16 to diagnose the failure, if any, of the DMA controller 16. The failure diagnostic device 18 is connected to the bus 17. The failure diagnostic device 18 operates for diagnosing the failure, if any, of the DMA controller 16 and also for monitoring the DMA controller 16. The failure diagnosing and monitoring operation of the failure diagnostic device 18 is in accordance with the signal from the DMA controller 16 to the bus 17 and the set data input from the CPU 15.

FIG. 3 is a block diagram of the failure diagnostic device 18. The reference symbols in FIG. 3 that are already described respectively denote the same components and will not be described repeatedly here.

The failure diagnostic device 18 includes plural diagnostic circuits 20. Each of the plurality of diagnostic circuits 20 is assigned to one of plural transfer requests 1 through N.

The failure diagnostic device 18 comprises a multiplexer 19 (allotter) and an OR gate 29 (another gate circuit). The multiplexer 19 allots each of plural different DMA transfer requests to one of the diagnostic circuits 20. The OR gate 29 outputs the logical disjunction of the detection outputs of the plurality of diagnostic circuits 20.

The multiplexer 19 individually monitors the plurality of diagnostic circuits 20 so as to see if each of them is assigned or not. The multiplexer 19 binds plural DMA transfer requests to some of the diagnostic circuits 20 other than the diagnostic circuits 20 that have already been assigned.

In response to a transfer request from a transfer source to a transfer destination, the failure diagnostic device 18 outputs an address signal to the transfer source. The failure diagnostic device 18 sets an upper limit for the time of outputting an address signal by means of the timer feature in the diagnostic circuits 20. The failure diagnostic device 18 monitors if the DMA controller 16 has output an address signal to the transfer source or not by the time of expiration of the timer upper limit value. If there has not been any output of an address signal by the time of expiration of the timer upper limit value, the failure diagnostic device 18 assumes that there has occurred a failure in the DMA controller 16. Then, the failure diagnostic device 18 notifies the occurrence of the failure to the outside.

Each of the diagnostic circuits 20 is a sub circuit of the failure diagnostic device 18.

The first one of the diagnostic circuits 20, or the first diagnostic circuit, is equipped with an input unit 21. The input unit 21 receives as input a transfer request command that is generated on the bus 17 and an upper limit value (limit time value) from the CPU 15. The input unit 21 is coupled to the address bus 17a and also to the data bus 17b.

Additionally, the diagnostic circuit 20 is equipped with a timer 22. A certain time is set in the timer 22 as limit time by the CPU 15. The set time is the duration of time from the notification of a transfer request to the DMA controller 16 down to the output of a transfer source address signal to the bus 17. The timer 22 starts timing in response to the notification of the transfer request.

The timer 22 is a count up timer. An upper limit time is set for the limit time in the timer 22 by the CPU 15. The upper limit time shows a timer value that corresponds to the allowable output standby time. The timer 22 receives a signal as input from detector 24. The signal indicates the end of timing and initialization.

Furthermore, the diagnostic circuit 20 is equipped with a monitor 23 and a detector 24.

The monitor 23 stops the timing operation of the timer 22 in response to an output of a transfer source address signal from the DMA controller 16 to the bus 17.

The monitor 23 monitors the address signal output from the DMA controller 16 by way of the address bus 17a. A signal line or a local bus may be connected to the monitor 23. The signal or the local bus is arranged between the monitor 23 and the output terminal of the DMA controller 16.

The detector 24 notifies an occurrence of a failure in the DMA controller 16 if the outcome of the timing operation that is stopped by the monitor 23 exceeds the limit time. In other words, the detector 24 detects an occurrence of a failure if the outcome of the timing operation exceeds the limit time.

The detector 24 judges if the address signal of the transfer source has been output by the upper limit value of the timer 22 or not by comparison. The detector 24 detects that the address signal has not been output by the upper limit value on the basis of the outcome of the judgment by comparison.

The detector 24 executes the comparison operation in response to an input of the upper limit value and the transfer source address signal to the timer 22.

The detector 24 is equipped with an address register 25 and a first comparator 26 (to be denoted by I). The address register 25 and the first comparator 26 are employed to determine if two addresses agree with each other or not.

The detector 24 is also equipped with an upper limit value register 27 and a second comparator 28 (to be denoted by II) . The upper limit value register 27 and the second comparator 28 are employed to compare a limit time and an elapsed time.

The address register 25 stores the address of the transfer source set by the CPU 15.

The first comparator 26 compares two addresses with each other. More specifically, the first comparator 26 compares the address of the transfer source stored in the address register 25 and the address of the signal on the bus 17 as detected by the monitor 23.

The upper limit value register 27 stores the upper limit value of limit time.

The second comparator 28 compares the outcome of the timing operation of the timer 22 and the upper limit value of limit time stored in the upper limit value register 27. The second comparator 28 stops the timing operation of the timer 22 if the outcome of the comparison by the first comparator 26 shows that the addresses agree with each other. The second comparator 28 initializes the timer value (read-out value) in response to such an outcome.

The configuration of the first diagnostic circuit 20 is described above. Each of the remaining diagnostic circuits 20 has a configuration substantially the same as that of the first diagnostic circuit 20.

Now, the operation of the semiconductor integrated circuit 10 of this embodiment having the above-described configuration at the time of a DMA transfer from the AD converter 12 to the RAM 13 will be described below by referring to FIGS. 1 and 3.

Firstly, the AD converter 12 (FIG. 1) outputs a DMA transfer request signal to the bus 17. At the time of outputting the request signal or after outputting the request signal, the AD converter 12 outputs the transfer source address and the transfer destination address to the bus 17. More specifically, the AD converter 12 outputs the address assigned to the buffer of the AD converter 12 and the address in a predetermined region of the RAM 13.

Prior to the start of the DMA transfer, the request signal for the DMA transfer and plural other request signals are input to the DMA controller 16 as shown in FIG. 3 (see request 1 through request N shown in FIG. 3). The other request signals are interrupt request signals that are generated as the completion of processing takes place at each of some or all of the devices 11, 12, 13.

The DMA controller 16 assigns the DMA transfer request signal to one of the plurality of sub circuits 52.

In response to the DMA transfer request signal from the AD converter 12, the DMA controller 16 outputs an acknowledge signal to the AD converter 12 on the bus 17.

The CPU 15 detects the DMA transfer request signal produced from the AD converter 12 or the acknowledge signal produced from the DMA controller 16.

Upon detecting either of the signals, CPU 15 takes in the transfer source address signal. In response to the DMA transfer request, the CPU 15 calculates the transfer time that is necessary for the DMA transfer. The calculated estimate by the CPU 15 is such that, for instance, the number of bytes of the data from the transfer source is divided by the data processing rate of the transfer destination and the wait time required for reading and writing is added to the outcome of the division. The CPU 15 acquires the information and the arithmetic formulas necessary for the calculations from the ROM 14. The CPU 15 holds the outcome of the calculations as the upper limit value of timer reading.

The CPU 15 initializes the transfer source address in the address register 30 in the DMA controller 16.

At the side of the failure diagnostic device 18, the multiplexer 19 starts operating. The start of operation of the multiplexer 19 is triggered by the first DMA transfer request signal or the notification from the CPU 15 that takes in the signal. The multiplexer 19 assigns the DMA transfer request, for example, to the first diagnostic circuit 20.

At the first diagnostic circuit 20, the CPU 15 stores the transfer source address in the address register 25 in the failure diagnostic device 18 to initialize the address register 25. The diagnostic circuit 20 initializes the timer 22. The CPU 15 initializes the upper limit value register 27 as it stores an upper limit value.

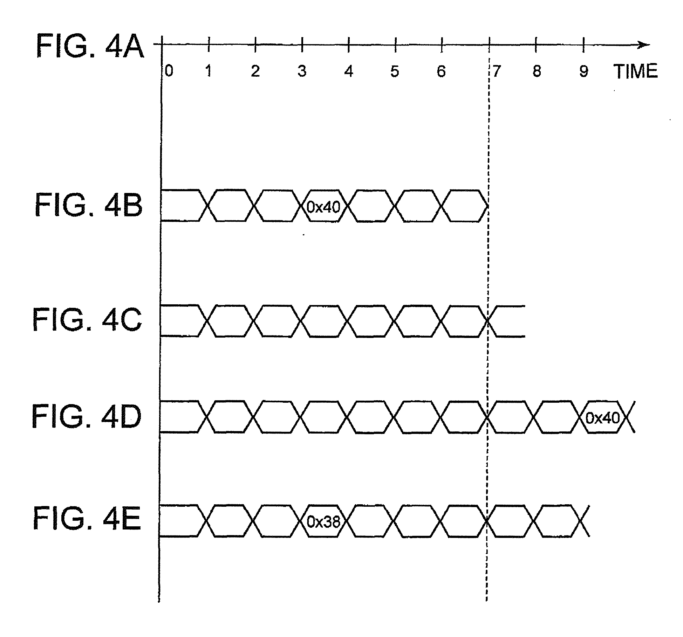

FIG. 4A is a timing chart showing the elapsed time of the timer 22. For example, an upper limit value of 7 is set in the timer 22.

FIG. 4B is a timing chart showing an exemplar address signal output from the DMA controller 16 that is monitored by the failure diagnostic device 18.

Then, the transfer request signal is asserted to the input terminal of the DMA controller 16. The expression of "assert" refers to a shift of the signal level of a bit in the request signal, which is formed by plural bits, to level HIGH. The assertion of the transfer request signal is shared by the failure diagnostic device 18 on the bus 17.

The timer 22 of the diagnostic circuit 20 starts a timing operation at the time if the transfer request signal is asserted, which serves as reference.

Assume that the failure diagnostic device 18 takes in the transfer source address of 0x40 from the DMA controller 16 after the expiration of the timer value 3 as shown in FIG. 4B. 0x indicates that the numerical value that follows 0x is a hexadecimal number. The timer value corresponds to the elapsed time in FIG. 4A.

The first comparator 26 compares the monitored address signal with the address signal stored in the address register 25. The first comparator 26 outputs an acknowledge signal indicating that the two addresses agree with each other. The timer 22 stops the timing operation if the signal is input to the timer 22.

The second comparator 28 compares the reading of the timer 22 with the upper limit value 7 stored in the upper limit value register 27. The comparator 28 outputs an acknowledge signal showing that the timer reading is smaller than the upper limit value.

Thus, the first comparator 26 and the second comparator 28 output respective acknowledge signals. In response to the outputs, the diagnostic circuit 20 determines that the transfer source address that corresponds to the request is produced before the preset upper limit value 7 is reached. If the diagnostic circuit 20 determines that the transfer source address is produced, the diagnostic circuit 20 reduces the value of the timer 22 to 0. Then, the diagnostic circuit 20 is returned to an inactivated status.

Assume, alternatively, that the failure diagnostic device 18 cannot acquire the transfer source address 0x40 by the expiration of the upper limit value 7 after the transfer request signal is asserted as shown in FIG. 4C.

If no transfer source address is produced before the limit time, the first comparator 26 and the second comparator 28 output respective negative (negative acknowledgement) signals. Then, the diagnostic circuit 20 determines that the DMA controller 16 has not started to operate and a failure has taken place. The detector 20 notifies the occurrence of a failure to the outside by way of the OR gate 29. For example, the negative signals may be notified by a bit at level HIGH.

Assume, still alternatively, that as a result of the monitoring operation of the failure diagnostic device 18, the device 18 detects the output of the transfer source address 0x40 after the expiration of the upper limit value 7 that comes after the assertion of the transfer request signal as shown in FIG. 4D.

If the output of the transfer source address is delayed, the first comparator 26 outputs an acknowledge signal whereas the second comparator 28 outputs a negative acknowledge signal. The diagnostic circuit 20 determines the detection of a failure occurrence in spite of the fact that the DMA controller 16 has started to operate. Then, the diagnostic circuit 20 notifies the occurrence of the failure to the outside.

Assume, still alternatively, that as a result of the monitoring operation of the failure diagnostic device 18, the device 18 detects the output of a wrong transfer source address 0x38 before the expiration of the upper limit time value 7 that comes after the assertion of the transfer request signal as shown in FIG. 4E.

If the transfer source address is wrong, the first comparator 26 keeps on outputting a negative acknowledge signal. The second comparator 28 outputs a negative acknowledge signal in response to the expiration of the upper limit value.

An address is generated as a result of a failure at the address generation circuit 58 of the DMA controller 16. The generated address differs from the address stored in the address register 30. If a transfer source address that differs from the address stored in the address register 30 is generated, the diagnostic circuit 20 assumes an occurrence of a situation where "the transfer source address is not generated".

As described above, there exists plural DMA failure modes that tell how the DMA controller 16 has fallen into a failure.
(i) a mode where the DMA controller 16 has not started to operate as shown in FIG. 4C. No right address is output for ever.
(ii) a mode where the right address is output with a time delay in spite of the fact that the DMA controller 16 has started to operate as shown in FIG. 4D.
(iii) a mode where the address is not correctly output in spite of the fact that it is output at the right time as shown in FIG. 4E or a mode where the DMA controller 16 has started at the wrong time.

Contrary to conventional techniques, according to this embodiment, a simply configured failure monitoring framework that provides advantages including a failure mode classification capability can be obtained by using a semiconductor integrated circuit 10 comprising a failure diagnostic device 18.

As described above, a failure monitoring arrangement that can be installed in a small area with a low power consumption rate and a low failure rate can be realized by using a semiconductor integrated circuit 10 comprising a failure diagnostic device 18 according to the present invention, which failure diagnostic device 18 can be formed with a simple configuration. Additionally, a feature of safeguarding the current time (a feature of satisfactorily securing the real time processing capability) that is required to DMA transfers can also be realized.

Essentially, DMA controllers 16 are so characterized that the users thereof can operate them with an intention of transferring data on a real time basis. A semiconductor integrated circuit 10 with a failure diagnostic device 18 according to the present invention becomes operable of failure-monitoring without using a dual lock step system by exploiting this characteristic on condition that the user provides information on the temporal restriction between a transfer request of each channel and the start of the transfer in advance.

Thus, a semiconductor integrated circuit 10 with a failure diagnostic device 18 according to the present invention becomes operative to provide in a simple manner a failure monitoring framework that can minimize both failures having a common cause and systematic failures without being required to be aware of an arbitration circuit.

Additionally, a semiconductor integrated circuit 10 with a failure diagnostic device 18 according to the present invention becomes operative to ascertain the occurrence or non-occurrence of a failure before the expiration of the upper limit time. Furthermore, a semiconductor integrated circuit 10 with a failure diagnostic device 18 according to the present invention becomes feasible to confine the time required for a DMA transfer within a predetermined temporal framework as an auxiliary effect thereof. The architectures of standard software platforms for on-board software have been defined on an agreement among plural software providers for the purpose of making on-board software commonly usable. A semiconductor integrated circuit 10 with a failure diagnostic device 18 according to the present invention becomes feasible to realize a framework of safeguarding the current time that is required by AUTOSAR (automotive open system architecture), which is one of such architectures in the field of DMA transfer.

Thus, the integrated circuit of this embodiment becomes operative to reliably monitor and diagnose the failure, if any, of the DMA controller 16 within a short period of time. If the circuit and the failure diagnostic device thereof are installed in an automobile as an LSI and if a failure takes place, the failure is always limited to a safe failure. For example, such an LSI can enhance the functional safety of an on-board system and guarantee the safety of the system. Then, the risk of failure of any of the components or the parts of the system is lowered to in turn improve the reliability of the on-board system.

Since the integrated circuit of this embodiment can detect failures, the on-board system can prevent the occurrence of a serious accident before the accident actually takes place. Thus, the integrated circuit of this embodiment becomes capable of enhancing the reliability of control systems relating to human safety such as a system for controlling an automotive brake, a system for controlling a nuclear power plant or a system for controlling railroad crossings.

### (Modifications)

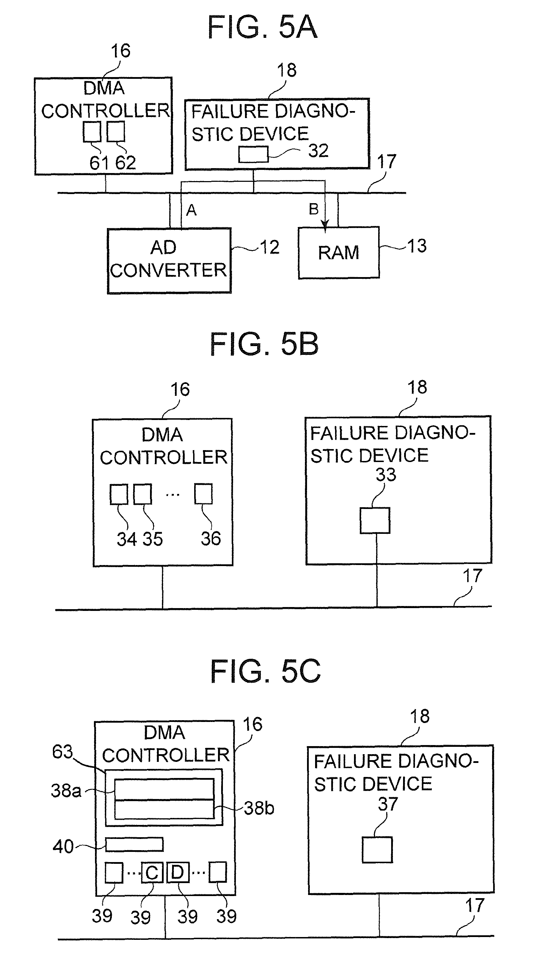

The failure diagnostic device 18 of the above-described embodiment may be equipped with one or more than one additional features. Now, modifications of integrated circuit according to the present invention will be described below by referring to FIGS. 5 through 7.

Unless noted otherwise, each of the semiconductor integrated circuits that are described below has a configuration same as that of the semiconductor integrated circuit 10 comprising the failure diagnostic device 18.

### (First Modification)

FIG. 5A is a block diagram of integrated circuit according to the first modification, illustrating the configuration thereof. The reference symbols in FIG. 5A that are described earlier respectively denote the same components and hence will not be described repeatedly.

The failure diagnostic device 18 comprises a third comparator 32. The third comparator 32 compares the data value output from the DMA controller 16 on the bus 17 and the data value input to the DMA controller 16. The third comparator 32 is, for instance, an exclusive OR gate having a number of bits that is equal to the bus width.

Now, the operation of the semiconductor integrated circuit 10 having the above-described configuration if a DMA transfer request from the AD converter 12 to the RAM 13 takes place will be described below.

After or during the DMA transfer by the DMA controller 16, the failure diagnostic device 18 takes in the input data and the output data.

The failure diagnostic device 18 takes the 32-bit data (see symbol A in FIG. 5A) from the AD converter 12 and the 32-bit data (see symbol B in FIG. 5A) to the RAM 13 respectively into the buffers 61, 62 in the DMA controller 16. The third comparator 32 determines by calculations the exclusive logical disjunction of the input data to be stored in the buffer 61 and the output data to be stored in the buffer 32.

The integrated circuit becomes possible to detect that, although the DMA controller 16 was correctly outputs the transfer source address signal, the address signal was then garbled on the route from the DMA controller 16 to the RAM 13.

Thus, the integrated circuit of the first modification with the failure diagnostic device can specify the spot where an abnormal status has taken place.

### (Second Modification)

FIG. 5B is a block diagram of integrated circuit according to the second modification, illustrating the configuration thereof. The reference symbols in FIG. 5B that are described earlier respectively denote the same components and hence will not be described repeatedly.

The failure diagnostic device 18 switches the mask of a setting value that has been set in advance in the DMA controller 16 either ON (for masking) or OFF (for unmasking).

The DMA controller 16 is equipped with registers 34, 35, ..., 36 for initialization as a default feature of the DMA controller 16. The registers 34, 35, ..., 36 store so many pieces of initialization information on plural DMA transfer requests.

The failure diagnostic device 18 is equipped with a mask setting section (mask storage section) 33. The mask setting section 33 operates for masking and unmasking the respective pieces of initialization information of the registers 34, 35, ..., 36 and also operates to detect the failure, if any, relating to the DMA transfer request that is turned effective by unmasking.

As the mask setting section 33 unmasks specific register bits, the initialization information that has been set for the corresponding DMA transfer is turned effective and a failure detection process is executed. The operation of setting ON or OFF in the mask setting section 33 is executed by the CPU 15.

Now, the operation of the semiconductor integrated circuit 10 having the above-described configuration will be described below. Prior to the operation of setting ON or OFF for the masks, an initialization value is stored in one of the registers, or the register 34. The initialization value is for a transfer source address, a transfer destination address, a DMA transfer command and so on. Similarly, an address pair and a DMA transfer command are stored in each of the other registers 35, ..., 36.

The CPU 15 causes the mask setting section 33 to lift the masks for all the registers 34, 35, ..., 36. Like the instance shown in FIG. 4, the failure diagnostic device 18 performs failure diagnosis for the DMA transfer request produced from one of the devices or for all the transfer requests produced from two or more than two devices.

The mask setting section 33 masks only the bit value of the register 34 out of all the registers 34, 35, ..., 36. Thus, if the bit of the register 34 is masked, the failure diagnostic device 18 excludes the DMA transfer request from the device specified by the register 34 to some other device out of the processing targets. The failure diagnostic device 18 operates for failure diagnosis for all the remaining inter-device transfer requests.

Or, the mask setting section 33 unmasks only the bit of the register 34. The mask setting section 33 leaves all the bits of the other registers 35, ..., 36 in a masked condition. Thus, as all the bits of the other registers 35, ..., 36 are left in a masked condition, the failure diagnostic device 18 handles only the DMA transfer request produced from the register 34.

Since the CPU 15 operates for masking or unmasking according to a user operation, only the DMA transfer request produced from a desired device can be selected out of all the devices. The integrated circuit is not necessary to operate for failure detection for all the inter-device transfer requests arising from all the combinations of the devices. Therefore, the integrated circuit becomes possible to suppress any potential expansion of the circuit size of the semiconductor integrated circuit 10.

Since a complex operation of initialization of the register bits needs to be carried out on a bit by bit basis, the integrated circuit is not efficient to issue a processing command each time if a transfer from the AD converter 12 to the RAM 13 is requested. Thus, the DMA controller 16 sets in advance respective values in the register 34 and the other registers to avoid the cumbersome operation of initialization that needs to be carried out for each processing.

If a request same as the one for which initialization has been done is received after the initialization is over, the DMA controller 16 does not repeat the processing again for receiving the same request. Once an unmasking operation is conducted by the failure diagnostic device 18, the DMA controller 16 is made to take in the data same as the one that has been set without processing for receiving the request.

As the failure diagnostic device 18 turns ON the masked status of one of the registers from OFF, it also operates for failure diagnosis. Assume, for example, the DMA transfer request from the AD converter 12 to the RAM 13 is unmasked. Then, after the unmasking, the failure diagnostic device 18 detects if the proper transfer source address has been obtained before the expiration of the timer upper limit value or not.

The integrated circuit of the second modification with the failure diagnostic device is operative to detect any abnormal operation based on an erroneous assumption. The erroneous assumption indicates that initialization for a DMA transfer has not been done yet, although the initialization has already been done for the DMA transfer. The circuit also detects any abnormal operation based on an erroneous assumption that initialization for a DMA transfer has already been done although initialization has not been done yet for the DMA transfer. The circuit also detects that the DMA controller 16 is on such a failure mode status.

### (Third Modification)

FIG. 5C is a block diagram of integrated circuit according to the third modification, illustrating the configuration thereof. The reference symbols in FIG. 5C that are described earlier respectively denote the same components and hence will not be described repeatedly.

The DMA controller 16 has an internal memory. The DMA controller 16 is equipped with a memory protection feature as default feature. Memory protection means prohibition of any access to a specific storage region of the internal memory by way of a corresponding port. The failure diagnostic device 18 may operate to restrict accesses to the storage region and lift the restriction.

More specifically, the DMA controller 16 is equipped with a first internal memory 63. The first internal memory 63 has a fist storage region 38a and a second storage region 38b. The first storage region 38a is accessible for read and write operations. On the other hand, accesses to the second storage region 38b for read and write operations are restricted.

The expression that "accesses are restricted" means both reading from and writing to the region are prohibited or only writing to the region is prohibited.

Furthermore, the DMA controller 16 is equipped with plural ports 39 and an access setting section 40. The plurality of ports 39 controls accesses to the first internal memory 63 by way of them.

The access setting section 40 protects the first storage region 38a against accesses by means of one of the plurality of ports 39. The access setting section 40 permits accesses to the second storage region 38b by means of another one of the plurality of ports 39.

The failure diagnostic device 18 is also equipped with a memory protection setting section 37. The memory protection setting section 37 sets the "memory protection" feature at the ports 39 on a port by port basis. The memory protection setting section 37 lifts the restriction to accesses from the ports 39 on a port by port basis. Then the memory protection setting section 37 operates to detect the failure, if any, for the transfer request by means of the port 39 that has been activated as a result of lifting the restriction. Setting operations of the memory protection setting section 37 are controlled by the CPU 15.

Now, the operation of the semiconductor integrated circuit 10 having the above-described configuration will be described below. Prior to setting the access restriction, the access setting section 40 sets protection, which may be permission, restriction or prohibition of data writing or data reading, for each of the plurality of storage regions of the first internal memory 63.

Then, the CPU 15 may cause the memory protection setting section 37 to lift the access restriction to the plurality of storage regions 38a, 38b. . . . in the first internal memory 63.

Thus, the access restriction to all the storage regions in the first internal memory 63 is lifted. If the access restriction is lifted, the failure diagnostic device 18 executes failure diagnosis for an arbitrarily selected DMA transfer request stored in the first internal memory 63 by means of one of the ports 39.

The CPU 15 may entirely prohibit any access to any of the storage regions in the first internal memory 63. If accesses are prohibited, the failure diagnostic device 18 does not execute any failure diagnosis for any transfer request.

The access setting section 40 may protect accesses to the first storage region 38a by means of a port 39 to which symbol C is affixed. The access setting section 40 may permit accesses to the second storage region 38b by means of a port 39 to which symbol D is affixed.

If the first storage region 38a is protected against accesses and accesses to the second storage region 38b are permitted, the failure diagnostic device 18 does not process any transfer request using the first storage region 38a out of all the DMA transfer requests. The failure diagnostic device 18 operates for failure diagnosis for an inter-device transfer request using the second storage region 38b.

The integrated circuit of the third modification with the failure diagnostic device becomes operative to detect the abnormal condition, if any, where a DMA transfer operation for which the first internal memory 63 is made accessible has not started. Additionally, the circuit becomes operative to detect the abnormal condition, if any, where a DMA transfer operation for which the first internal memory 63 is made inaccessible has started.

### (Fourth Modification)

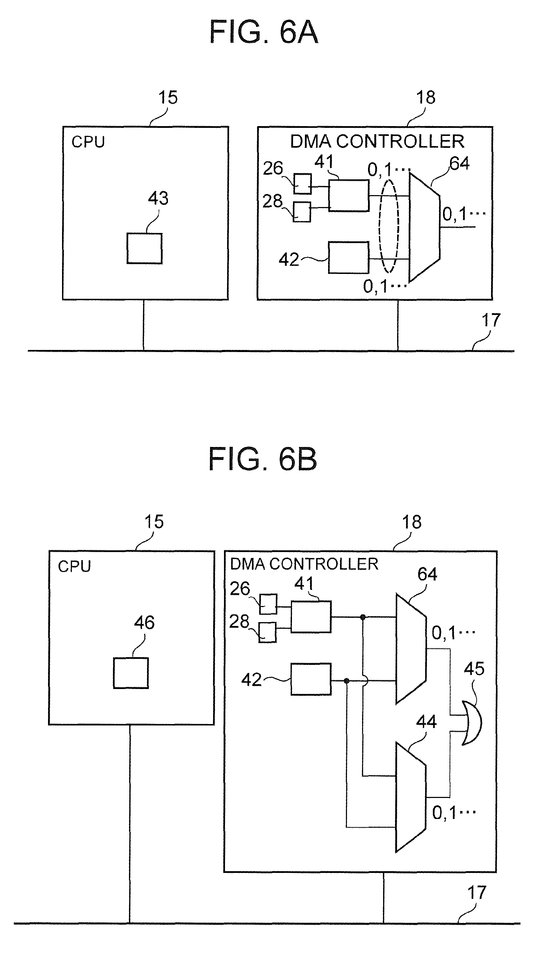

FIG. 6A is a block diagram of integrated circuit according to the fourth modification, illustrating the configuration thereof. The reference symbols in FIG. 6A that are described earlier respectively denote the same components and hence will not be described repeatedly.

The description on the preceding modifications is given above for possible failures of the DMA controller 16. The fourth modification of integrated circuit comprising the failure diagnostic device operates for diagnosis if an abnormal condition takes place in the failure diagnostic device 18.

The failure diagnostic device 18 stores an expected value in the failure diagnostic device 18 in advance. The failure diagnostic device 18 executes an initial diagnostic operation, comparing the output of each of the first comparator 26 and the second comparator 28 (FIG. 3) with the expected value. The first comparator 26 compares the address of the transfer source and the address signal on the bus 17. The second comparator 28 compares the timer reading with the time upper limit value.

The semiconductor integrated circuit 10 is equipped with a second internal memory 43 in the CPU 15. The second internal memory 43 stores the expected value of the address of the transfer source and software for executing failure diagnosis by means of the expected value. The second internal memory 43 may be provided as an independent memory device that is connected to the bus 17.

The failure diagnostic device 18 is equipped with a first buffer 41. The first buffer 41 selectively stores the output value of the first comparator 26 or that of the second comparator 28.

The failure diagnostic device 18 is equipped with a second buffer 42 and a comparison judgment unit 64. The second buffer 42 stores the expected value that is stored in the second internal memory 43. The comparison judgment unit 64 makes its decision by comparing the output of the buffer 41 and that of the buffer 42.

The comparison judgment unit 64 compares the output of the first comparator 26 and the expected value stored in the second internal memory 43.

The semiconductor integrated circuit 10 having the above-described configuration performs a diagnostic operation to see if a right result is obtained by combining all the inputs at the initial start time, which may be the time if the automobile engine is started.

The CPU software to be executed by the CPU 15 outputs test bits that show the expected value of an address for the second buffer 42 to the bus 17. The test bits are a bit string having a designed value for the purpose of a stuck-at fault detection test. The failure diagnostic device 18 writes the test bits in the buffer 42. The output of the first comparator 26 is expressed, for example, by 0 or 1. The failure diagnostic device 18 writes 0 or 1, whichever appropriate, in the buffer 41.

The comparison judgment unit 64 compares the output, 0 or 1, of the buffer 41 and the output, 0 or 1, of the buffer 42. The comparison judgment unit 64 acquires the result of combination of the two input bits. Then, the CPU 15 acquires the outcome of the operation of the comparison judgment unit 64.

The CPU 15 monitors the output of the comparison judgment unit 64 by varying the pattern of 0s and 1s output from the first comparator 26.

If, for example, the outputs of the first comparator 26 are always 0, the CPU 15 determines that an OK failure has occurred in the hardware of the comparator 26. An OK failure is a safe failure that can keep the system in a safe condition if the failure occurs.

If, on the other hand, the outputs of the first comparator 26 are always 1, the CPU 15 determines that an NG failure has occurred in the hardware of the comparator 26. An NG failure is a dangerous failure that can directly bring the system into a dangerous condition once the failure occurs.

The CPU software outputs an alarm to the user and the system. In an instance of an automobile, the alarm can notify the person or persons trying to get into the automobile of the danger of doing so and prevent the automobile from starting.

The monitoring feature of the system is damaged if the failure diagnostic device 18 falls into an abnormal condition. Then, if the system is operating because the software assumes that the monitoring operation is normal, there is no denying that an accident should happen if the monitoring feature has turned abnormal.

While the above description is given for the first comparator 26 as an example, it also applies to determining if the output of the second comparator 28 is abnormal or not.

Namely, the expected value of the timer upper limit value of the timer 22 (FIG. 3) is stored in the second internal memory 43 in advance.

The value of the buffer 42 that has been taken in by the failure diagnostic device 18 and the value of the buffer 41 to which the output from the second comparator 28 has been written are compared.

The comparison judgment unit 64 compares the output from the second comparator 28 and the expected value of the upper limit value. The CPU software diagnoses the failure, if any, of the second comparator 28.

The integrated circuit of the fourth modification with the failure diagnostic device becomes operative to diagnose the failure, if any, of the buffer 41 as each of the first comparator 26 and the second comparator 28 compares an expected value and an output value for initial diagnoses.

Additionally, since the integrated circuit includes an interface for the CPU software to control the inputs to and the outputs from the first comparator 26 and the second comparator 28, the integrated circuit becomes operative to detect any abnormal situation that can take place in the failure diagnostic device 18 in early stages of abnormality.

### (Fifth Modification)

FIG. 6B is a block diagram of integrated circuit according to the fifth modification, illustrating the configuration thereof. The reference symbols in FIG. 6B that are described earlier respectively denote the same components and hence will not be described repeatedly.

The comparison judgment (first comparison judgment) unit 64 in the fourth modification may be duplexed.

The failure diagnostic device 18 is equipped with a first comparison judgment unit 64, a second comparison judgment unit 44 and an OR gate circuit 45. The second comparison judgment unit 44 is produced by duplexing the first comparison judgment unit 64. The OR gate circuit 45 outputs the logical disjunction of the first comparison judgment unit 64 and the second comparison judgment unit 44. The first comparison judgment unit 64 and the second comparison judgment unit 44 are realized by hardware.

The CPU 15 is equipped with a third comparison judgment unit 46. The third comparison judgment unit 46 diagnoses the failure, if any, of the first comparator 26 or the second comparator 28 by means of the output of the OR gate circuit 45. The third comparison judgment unit 46 is realized by CPU software.

The semiconductor integrated circuit 10 having the above-described configuration operates for diagnosis to see if the combination of all the inputs produces a right outcome or not at the time of the initial start of operation of the circuit.

The failure diagnostic device 18 writes the test bits that indicate the expected value of the address from the CPU software in the buffer 42. The failure diagnostic device 18 also writes the output of 0 or 1 from the first comparator 26 in the buffer 41.

The first comparator 64 compares the buffers 41 and 42. The second comparator 44 also compares the same buffers 41 and 42.

Thereafter, the first comparison judgment unit 64 and the second comparison judgment unit 44 operate just the same as the comparison judgment unit 64 of the fourth modification. The CPU 15 performs a monitoring operation of seeing if the value of 0 or 1 appears consecutively or not from the output of the OR gate circuit 45. Thus, the CPU 15 can monitor the occurrence or non-occurrence of a stuck-at fault that constantly indicates 0 or 1.

If the output of the OR gate circuit 45 is constantly 0, the CPU 15 determines that an OK failure has taken place in the hardware of the first comparison judgment unit 64 or that of the second comparison judgment unit 44. Then, the CPU software notifies the person or persons in charge of information indicating the OK failure.

If, on the other hand, the output of the OR gate circuit 45 is constantly 1, the CPU 15 determines that an NG failure has taken place in the hardware of the first comparison judgment unit 64 or that of the second comparison judgment unit 44. Then, the CPU software issues an alarm for notifying the person or persons in charge of information indicating the NG failure.

As described above, both the first comparator 26 and the second comparator 28 are duplexed. The judgment feature is also duplexed. The integrated circuit of the fifth modification with the failure diagnostic device becomes operative to detect the abnormal situation, if any, that has taken place in the first comparison judgment unit 64 or in the second comparison judgment unit 44 even if the buffers 41 and 42 are operating normally among the components of the failure diagnostic device 18.

As the judgment feature is duplexed, if either the first comparison judgment unit 64 or the second comparison judgment unit 44 is broken, this modification would not overlook any serious failure.

### (Sixth Modification)

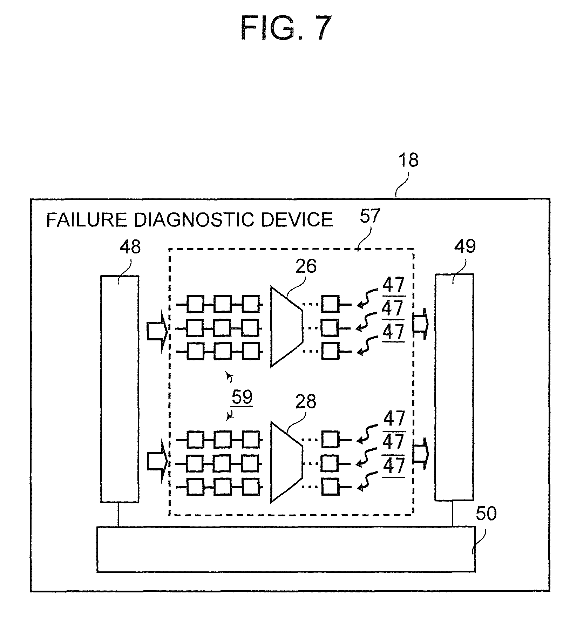

FIG. 7 is a block diagram of integrated circuit according to the sixth modification, illustrating the configuration thereof. The reference symbols in FIG. 7 that are described earlier respectively denote the same components and hence will not be described repeatedly.

The initial diagnostic operation by the fourth modification of comparing the output value and expected value of the first comparator 26 and those of the second comparator 28 may be executed by a hardware BIST (built-in selftest) circuit instead of the CPU software.

The failure diagnostic device 18 is equipped with a logic circuit 57 and plural scanning path circuits 47. The logic circuit 57 includes a first comparator 26 and a second comparator 28. The plurality of scanning path circuits 47 are formed in the logic circuit 57. They are circuits for testing the first comparator 26 and the second comparator 28.

A scanning path circuit 47 is formed by serially connecting plural flip-flops 59.

The failure diagnostic device 18 is equipped with a test pattern generator 48 for the plurality of scanning path circuits 47 and a compressor 49. The compressor 49 compresses the responses to a test pattern coming from the scanning path circuits 57.

Additionally, the failure diagnostic device 18 is equipped with a built-in selftest circuit 50. The built-in selftest circuit 50 controls the test pattern generator 48 and the compressor 49 and determines the failure, if any, of the first comparator 26 or the second comparator 28.

In the failure diagnostic device 18 having the above-described configuration, the built-in selftest circuit 50 switches the status of the logic circuit 57 to a shift status, to a capture status and again to a shift status.

During the first shift status, the plurality of flip-flops 59 form respective shift registers. The test pattern is shifted in to all the shift registers. A value is set in each of the flip-flops 59.

Uninterruptedly, during the capture status, the values of all the flip-flops 59 are transferred in the logic circuit 57. Then, the output from the logic circuit 57 is taken in the next stage flip-flops 59.

Thereafter, the built-in selftest circuit 50 is brought back from the capture status into a shift status.

The shifted out result of the logic circuit 57 is compressed by the compressor 49. The above operation is completed as the built-in selftest circuit 50 compares the output of the compressor with the expected value that is stored in advance after repeating the shift in and shift out cycle.

The integrated circuit of the sixth modification with the failure diagnostic device can detect the occurrence of a failure that takes place at the side of the failure diagnostic device 18 by means of a hardware circuit so that the load at the side of the CPU 15 can be reduced.

### (Seventh Modification)

The number of diagnostic circuits 20 shown in FIG. 3 may be smaller than the maximum number of transfer requests that can arise simultaneously.

The CPU 15 assigns a channel to each of the devices bound to the bus 17. If the number of channels is greater than the instance of FIG. 1 and equal to 10, ten diagnostic circuits 20 are sufficient.

The CPU 15 or the multiplexer appropriately selects a diagnostic circuit 20 depending on if any of the diagnostic circuits 20 has been assigned or not or the amount of data to be processed at each time point.

If there arise several times of ten transfer requirements at a time, the multiplexer 19 binds them to some of the ten diagnostic circuits 20.

If, unlike the instance of FIG. 3, the number of diagnostic circuit 20 is only one, the multiplexer 19 is not needed. The above-described diagnostic feature can be realized if the failure diagnostic device 18 is equipped only with a single diagnostic circuit 20.

The present invention is by no means limited to the embodiment and the modifications that are described above. Any of the components of them can be modified for embodying the present invention without departing from the scope and spirit of the present invention.

The semiconductor integrated circuit 10 of the above-described embodiment comprises a CPU 15. However, embodiments of integrated circuit of the present invention may not comprise a CPU 15 as a component for integration.

The configuration of the DMA controller 16 of FIG. 2 is shown only as an example. In other words, the configuration of the DMA controller 16, which is the object of diagnosis, can be modified and/or altered in various different ways. The failure diagnostic device 18 diagnoses the failure, if any, of the DMA controller 16 from the outside of the DMA controller 16. It may be needless to say that any alteration to one or more than one of the internal components in the inside of the DMA controller 16 does not intrinsically influence the failure diagnostic device 18 and the semiconductor integrated circuit 10.

While the above-described timer 22 is a count-up timer, the timer 22 may alternatively be a count-down timer. Then, the CPU 15 may be set a lower limit value to the timer 22. The failure diagnostic device 18 may compare the timer reading and the lower limit value.

The superiority of the integrated circuit of this embodiment relative to embodiments incorporating any of such possible alterations is not damaged.

The semiconductor integrated circuit 10 is applicable to built-in type microcomputers and SoC (system-on-chip). For example, it may be applied to an on-board microcomputer or an on-board SoC.

The functional features of the DMA controller 16 and those of the failure diagnostic device 18 can be realized mainly by means of an ASIC (an application specific integrated circuit).

While certain embodiments have been described, these embodiments have been presented by way of example only, and are not intended to limit the scope of the inventions. Indeed, the novel methods and systems described herein may be embodied in a variety of other forms; furthermore various omissions and substitutions and changes in the form of methods and systems described herein may be made without departing from the spirit of the inventions. The accompanying claims and their equivalents are intended to cover such forms or modifications as would fall within the scope and spirits of the inventions.

## Claims

1. An integrated circuit comprising:
plural devices configured to be controlled;
a processor configured to control the plural devices;
a DMA (direct memory access) controller configured to control data transfers among the plural devices by an instruction from the processor;
a bus configured to be commonly connected to the DMA controller, the processor and the plural devices; and
a failure diagnostic device connected to the DMA controller and configured to diagnose failure of the DMA controller, the failure diagnostic device including:
a timer of which a limit time configured to be set up by the processor for the time from a notification of a transfer request to the DMA controller down to output of a transfer source address signal to the bus and start a timing operation in response to the notification;
a monitor configured to stop the timing operation in response to the output from the DMA controller to the bus; and
a detector configured to detect occurrence of a failure according to an excess of an outcome of the timing operation stopped by the monitor over the limit time.

2. The integrated circuit of claim 1, wherein
the detector comprises:
a first comparator configured to compare the first address of the transfer source set up by the processor with the second address of the transfer source address signal produced by the monitor; and
a second comparator configured to compare an outcome of the timing operation stopped by a result representive of coincident of the two addresses from the first comparator with an upper limit value of the limit time.

3. The integrated circuit of claim 1, further comprising:
a third comparator configured to compare an output data value from the DMA controller with an input data value to the DMA controller.

4. The integrated circuit of claim 1, wherein
the DMA controller configured to comprise plural registers for respectively storing setting values for plural DMA transfer requests, and further comprises
a mask setting section configured to operate for masking or unmasking the setting value of each of the registers and perform an operation of detecting the failure relative to any of the unmasked DMA transfer requests.

5. The integrated circuit of claim 1, wherein
the DMA controller configured to comprise: a first internal memory having an accessible first storage region and a second storage region to which accesses are restricted; plural ports, each port controlling an access to the first internal memory; and an access setting section that protects the first storage region against accesses by one of the plurality of ports and permitting accesses to the second storage region by another one of the plurality of ports, and further comprises
a memory protection setting section configured to lift restriction to accesses for each port and perform an operation of detecting the failure relative to a DMA transfer request by one of the ports.

6. The integrated circuit of claim 2, further comprising:
a second internal memory configured to store the first expected value of the transfer source address or the second expected value of the limit time;
a buffer configured to store the output from the first comparator or the second comparator; and
a comparison judgment unit configured to compare the output of the first comparator stored in the buffer with the first expected value or the output of the second comparator stored in the buffer with the second expected value.

7. The integrated circuit of claim 2, further comprising:
a second internal memory configured to store the first expected value of the address of the transfer source or the second expected value of the limit time;
a buffer configured to store the output from the first comparator or the second comparator;
a first comparison judgment unit configured to compare the output of the first comparator stored in the buffer with the first expected value or the output of the second comparator stored in the buffer with the second expected value;
a second comparison judgment unit provided by duplexing the first comparison judgment;
a gate circuit configured to output the logical disjunction of the first comparison judgment unit and the second comparison judgment unit; and
a third comparison judgment unit arranged in the processor for diagnosing the failure of any of the comparator by the output of the gate circuit.

8. The integrated circuit of claim 2, further comprising:
a scanning path circuit configured to test the first comparator and the second comparator;
a generator configured to generate a test pattern for the scanning path circuit; and
a built-in selftest circuit configured to judge the failure of each of the comparator according to the response from the scanning path circuit to the generated test pattern.

9. The integrated circuit of claim 1, further comprising:
plural diagnostic circuits, each diagnostic circuit configured to include the timer, monitor and detector; and
an allotter configured to allot plural different DMA transfer requests to the plurality of diagnostic circuits in each transfer request.

10. The integrated circuit of claim 9, further comprising:
another gate circuit configured to output the logical disjunction of the detection outputs of the plurality of sub circuits.

11. An integrated circuit comprising:
plural devices configured to be controlled;
a DMA (direct memory access) controller configured to control data transfers among the plural devices by a processor instruction for the plural devices;
a bus configured to be connected to the DMA controller and the plural devices; and
a failure diagnostic device connected to the DMA controller and configured to diagnose failure of the DMA controller, the failure diagnostic device including:
a timer of which a limit time configured to be set up by the processor instruction for the time from a notification of a transfer request to the DMA controller down to output of a transfer source address signal to the bus and start a timing operation in response to the notification;
a monitor configured to stop the timing operation in response to the output from the DMA controller to the bus; and
a detector configured to detect occurrence of a failure according to an excess of an outcome of the timing operation stopped by the monitor over the limit time.

12. The integrated circuit of claim 11, wherein
the detector comprises:
a first comparator that compares the first address of the transfer source set up by the processor instruction with the second address of the transfer source address signal produced by the monitor; and
a second comparator configured to compare an outcome of the timing operation stopped by a result representive of coincident of the two addresses from the first comparator with an upper limit value of the limit time.

13. The integrated circuit of claim 11, further comprising:
a third comparator configured to compare an output data value from the DMA controller with an input data value to the DMA controller on the bus.

14. The integrated circuit of claim 11, wherein
the DMA controller configured to comprise plural registers for respectively storing setting values for plural DMA transfer requests, and further comprises
a mask setting section configured to operate for masking or unmasking the setting value of each of the registers and perform an operation of detecting the failure relative to any of the unmasked DMA transfer requests.

15. The integrated circuit of claim 11, wherein
the DMA controller configured to comprise: a first internal memory having an accessible first storage region and a second storage region to which accesses are restricted; plural ports, each port controlling an access to the first internal memory; and an access setting section that protects the first storage region against accesses by one of the plurality of ports and permitting accesses to the second storage region by another one of the plurality of ports, and further comprises
a memory protection setting section configured to lift restriction to accesses for each port and perform an operation of detecting the failure relative to a DMA transfer request by one of the ports.

16. A failure diagnostic device of a DMA (direct memory access) controller, comprising:
a timer of which a time, from a notification of a transfer request to the DMA controller for controlling data transfers among plural devices down to the output of a transfer source address signal to a bus, is set up as a limit time by a processor instruction and which starts a timing operation in response to the notification;
a monitor configured to stop the timing operation in response to the output from the DMA controller to the bus; and
a detector configured to detect occurrence of a failure according to an excess of an outcome of the timing operation stopped by the monitor over the limit time.

17. The failure diagnostic device of a DMA controller of claim 16, wherein
the detector comprises:
a first comparator configured to compare the first address of the transfer source set up by the processor instruction with the second address of the transfer source address signal produced by the monitor; and
a second comparator configured to compare an outcome of the timing operation stopped by a result representive of coincident of the two addresses from the first comparator with an upper limit value of the limit time.

18. The failure diagnostic device of a DMA controller of claim 16, further comprising:
a third comparator configured to compare an output data value from the DMA controller with an input data value to the DMA controller.

19. The failure diagnostic device of a DMA controller of claim 16, wherein
the DMA controller configured to comprise plural registers for respectively storing setting values for plural DMA transfer requests, and further comprises
a mask setting section configured to operate for masking or unmasking the setting value of each of the registers and perform an operation of detecting the failure relative to any of the unmasked DMA transfer requests.

20. The failure diagnostic device of a DMA controller of claim 16, wherein
the DMA controller configured to comprise: a first internal memory having an accessible first storage region and a second storage region to which accesses are restricted; plural ports, each port controlling an access to the first internal memory; and an access setting section that protects the first storage region against accesses by one of the plurality of ports and permitting accesses to the second storage region by another one of the plurality of ports, and further comprises
a memory protection setting section configured to lift restriction to accesses for each port and perform an operation of detecting the failure relative to a DMA transfer request by one of the ports.
